(19) Europäisches Patentamt

European Patent Office

Office européen des brevets

(11) **EP 1 669 857 A2**

(12) **EUROPEAN PATENT APPLICATION**

(43) Date of publication:
**14.06.2006 Bulletin 2006/24**

(51) Int Cl.:
***G06F 9/44*** (2006.01)

(21) Application number: **05026067.8**

(22) Date of filing: **30.11.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **03.12.2004 IT RN20040062**

(71) Applicants:
• **Dellamore, Andrea**
  **47100 Forli' (FC) (IT)**

• **Mazza, Loris**
  **47892 Gualdicciolo (SM)**

(72) Inventors:
• **Dellamore, Andrea**
  **47100 Forli' (FC) (IT)**
• **Mazza, Loris**
  **47892 Gualdicciolo (SM)**

(74) Representative: **Provvisionato, Paolo**
  **Provvisionato & Co S.r.l.,**
  **Piazza di Porta Mascarella, 7**
  **40126 Bologna (IT)**

(54) **Mobile telephony device**

(57) A mobile telephony device, having a keypad (20) and an electronic platform (11), designed to interpret programs in Java language, comprises a software (12) for calculating the blood-alcohol level using information that can be entered using the keypad (20). The software (12) comprises a calculation procedure (110), designed to supply a user with an estimate of the blood-alcohol level and an estimate of the time necessary for said blood-alcohol level to fall below a predetermined value.

FIG. 1

EP 1 669 857 A2

**Description**

The present invention relates to a mobile telephony device.

The various innovations introduced in the Highway Code have brought compliance with regulations regarding drink-driving to a position of primary importance. The penalties for offences are very heavy, with the aim of inducing all motorists to take maximum care when consuming alcohol before getting behind the wheel.

However, since the maximum blood-alcohol level limit in Italy is objectively low, equal to 0.5 milligrams of alcohol per millilitre of blood, or the equivalent 0.05 grams per decilitre, it is not easy to be able to establish whether or not you are under this limit even when your alcohol consumption is well within the norm. It should be remembered that many factors influence the definition of this parameter: amongst the main factors is, obviously the amount of alcohol consumed and its alcoholic strength, but a person's gender, height, weight and metabolism too.

It is widely accepted that the blood-alcohol level, that is to say, the concentration of alcohol in the blood, may be defined using formulas based on constants that vary according to a person's gender. Amongst the formulas used, Widmark's formula allows calculation of the blood-alcohol level, measured in milligrams of alcohol per millilitre of blood. It may be expressed as a ratio of the product of the amount of alcohol consumed multiplied by the specific gravity of the alcohol multiplied by the specific gravity of the blood and the product of a person's weight multiplied by the Widmark factor, which has a value of 0.73 for men and 0.66 for women.

A development of this formula, by Watson, used in particular in the United States, allows calculation of the so-called BAC (blood alcohol content), measured in grams of alcohol per decilitre of blood, as one hundred times the ratio of the amount of alcohol, measured in grams, present in the body at a certain time after last consuming alcohol and the amount of blood, measured in millilitres, circulating in the body.

The amount of alcohol present in your body at a certain moment may be calculated as the difference between the alcohol consumed and the alcohol metabolised: the former, in grams, may be obtained as the product of the amount of drink, in millilitres, multiplied by its alcoholic strength, as a percentage, multiplied by the density of the alcohol, in gram per millilitre; the latter, also in grams, is the product of the mean metabolic absorption, in grams per hour, multiplied by the time that has elapsed, in hours. In this procedure the density of the alcohol, equal to 0.79, and the mean metabolic absorption, equal to 9.5, are used as constants.

The amount of blood circulating in own body may be estimated by calculating the amount of water and bearing in mind that this constitutes 81.57% of blood volume. In turn, the amount of water may be deduced from the height, weight and gender of a person using constants which allow calculation of the so-called TBW (total body water) expressed in millilitres. This is from the sum of three contributions, measured in litres, multiplied by one thousand: a constant contribution, equal to 2.447 for men and 2.097 for women; a height-related contribution, which may be obtained from the product of a height constant, in litres per centimetre, equal to 0.1074 for men and 0.1069 for women, multiplied by the height, in centimetres; a weight-related contribution, which can be obtained from the product of a weight constant, in litres per kilograms, equal to 0.3362 for men and 0.2466 for women, multiplied by the weight, in kilograms.

It seems evident that an estimate, even only approximate, of a person's blood-alcohol level is practically impossible to carry out mentally. Nor is it conceivable that a person should constantly carry with them an apparatus similar to the breathalysers used by the police in order to be able to measure their blood-alcohol level themselves.

Even if a person realises that they are over the legal limit, it is impossible to evaluate how much time will be required before their blood-alcohol level falls enough to be within the normal limits.

There are online programs which calculate the blood-alcohol level using one of the above formulas, or others similar to them: however, unfortunately, they can only be useful if a person has at least a PC to hand, therefore in an environment habitually frequented, such as a home or office. In contrast, the possibility of checking this data is necessary when people are out, for example at a bar, in a dance venue or at a party.

Moreover, these programs refer to rather limited databases, which in many cases do not allow a simple or direct evaluation of the impact of the drinks consumed on a person's blood-alcohol level, nor do they allow combination of the effects of two or more drinks. Finally, their use is limited, both because of the above-mentioned impossibility of being transferred to a portable support which would allow their use in a much vaster range of situations, and because of the inflexibility which prevents their adaptation and customisation, for example adherence to laws other than the local law and the possibility of entering updates.

The aim of the present invention is, therefore, to eliminate the above-mentioned disadvantages. This is achieved by implementing on a mobile telephony device, for example a mobile telephone, a software suitable for calculating the blood-alcohol level.

The main advantage obtained using the present invention is basically the fact that it is possible to have, immediately and anywhere, an estimate of own blood-alcohol level and if necessary an evaluation of the time necessary to return within the acceptable limits for driving a car.

Another advantage is the fact that the program may be transferred from the supplier to the user in a number of ways, whether using a connection to a PC (via cable or an infrared port), or via radio waves (in a similar way to an SMS).

Moreover, the software may be constantly updated by means of a connection to a server accessible online, and customised by the user to comply with any changes in the local law and to laws other than the local law.

Finally, the database which can be used may be extended and improved.

Further advantages and features of the invention are more evident in the detailed description which follows, with reference to the accompanying drawings, which illustrate a preferred embodiment without limiting the scope of the invention, in which:

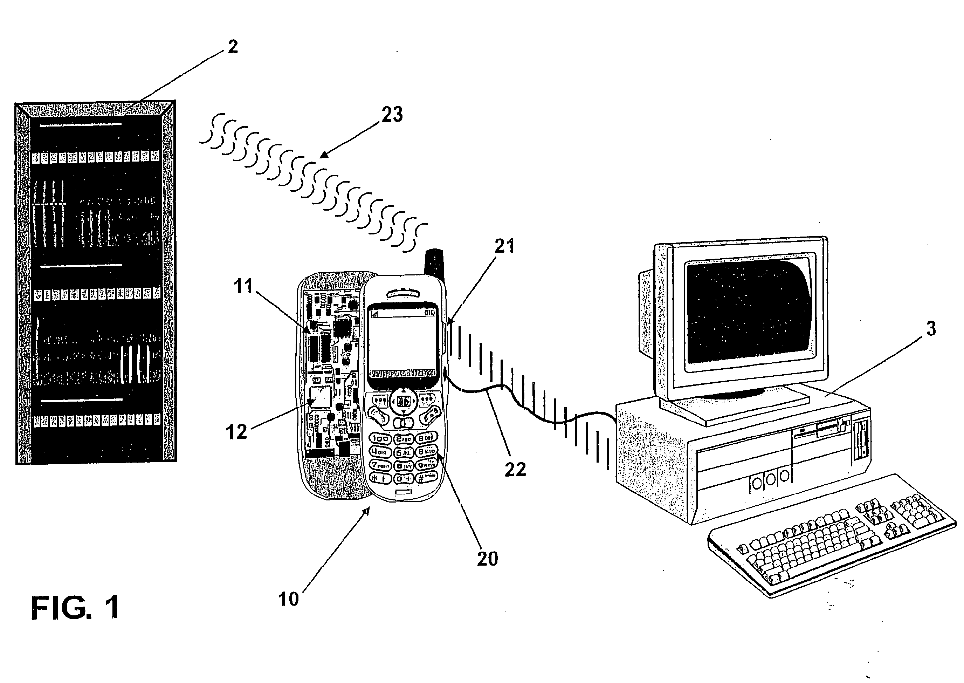

- Figure 1 is a schematic overview of the invention;
- Figure 2 is a schematic illustration of the operating flow of the invention.

The invention relates to a mobile telephony device, in particular a mobile telephone, equipped with a software (12) for calculating the blood-alcohol level, understood to be the blood-alcohol concentration.

Other portable apparatuses for this purpose are videogames, pagers, palmtops and the like.

As illustrated, the invention comprises a mobile telephone (10) with a keypad (20), or a similar apparatus, having an electronic platform (11), designed to interpret Java language programs.

Installed on the mobile telephone (10) is a software (12) able to calculate the blood-alcohol concentration using suitable formulas, for example Widmark's formula or the formula developed by Watson.

These can be applied by a user simply supplying information by entering it using the keypad (20).

The software (12) consists of an application which can produce various compilations according to the type of electronic platform (11) the mobile telephone (10) or similar apparatus has.

In a preferred embodiment, referred to hereinafter without in any way limiting the scope of the inventive concept to be protected, the software (12) consists of an executable program which conforms to MIDP specifications for mobile telephones (10) and, more specifically, suitable for implementation on mobile telephony apparatuses which have a MIDP 1.0 (CLDC 1.0) or JTWI (MIDP 2.0, CLDC 1.0 and 2.0, Wireless Messaging API JSR 120 and Mobile Media API JSR 135) compatible electronic platform (11).

The software (12) may be implemented on the mobile telephone (10) in various ways: in particular, an "over-the-air provisioning" (OTA) type process is preferable, that is to say, using radio waves (23) from a remote supplier (2), as happens with SMS. Alternatively, it can be downloaded from a PC (3) using an infrared port (21) or cable (22) connection.

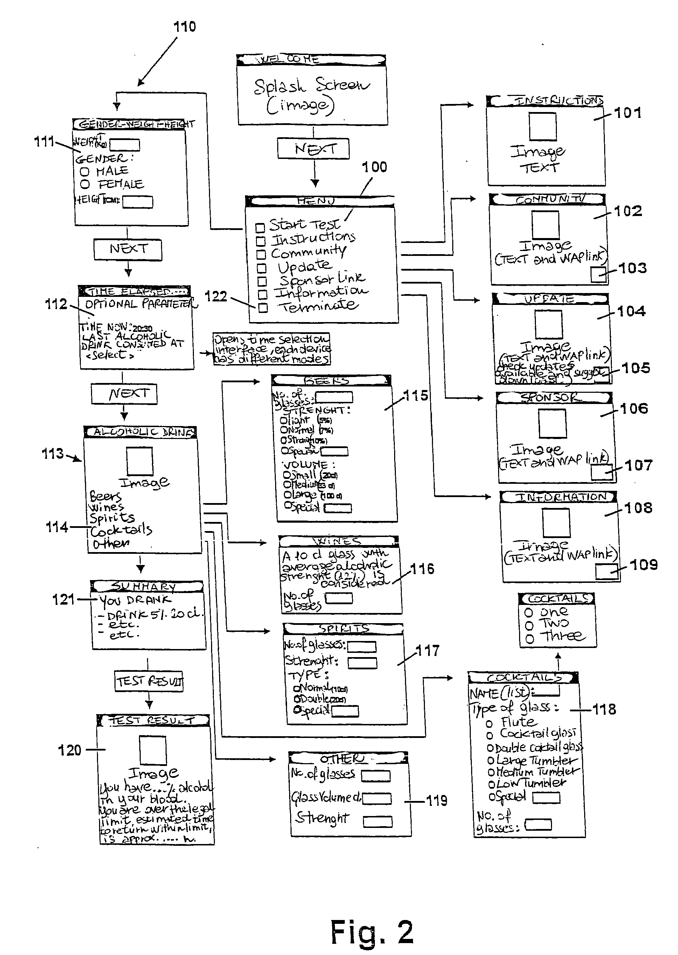

The operating flow of the software (12) is illustrated in Figure 2. In the example described below, it allows calculation of the blood-alcohol level using the formula developed by Watson, but it would have been possible to use a similar process for calculation with Widmark's formula, or other similar formulas.

In particular, there is an initial menu (100), from which, in addition to a calculation procedure (110) and an exit procedure (122), the user can select various general data, including, in particular, an instructions text (101) relative to software (12) operation, an information text about a "community" (102) based on this subject and a link (103) to the "community" by WAP link; an update text (104) for the software (12) and a link (105) to a remote supplier (2) by WAP link, designed to display and if necessary download the updates available; an initiative sponsor text (106) and a link (107) to the sponsor's site by WAP link; a general information text (108) about the subject and a link (109) to sites relating to the subject by WAP link.

When starting the calculation procedure (110), firstly the information needed for the Watson formula must be supplied: therefore the software (12) has a first level of personal information (111), requiring the supply of the user's gender, height and weight; a second level of time information (112), requiring the supply of the time when the last alcoholic drink was consumed; a third level of mode information (113), requiring the supply of the type and amount of alcohol consumed.

The third level of mode information (113) has a menu (114), corresponding to a quite detailed database, which can be used to select various lists of alcoholic drinks in order to supply, for each drink, the characteristics and methods of consumption.

Figure 2 illustrates a plurality of sub-menus (115, 116, 117, 118, 119), each corresponding to a database for a single type of drink: a sub-menu (115) for beers, which allows entry of information regarding the type of beer consumed, the size of the drink and the number of glasses; a sub-menu (116) for wines, which allows entry of information regarding the number of glasses drunk; a sub-menu (117) for spirits, which allows entry of information regarding the alcoholic strength of the drink, the number and type of glasses consumed; a sub-menu (118) for cocktails, which allows entry of information regarding the type of cocktails, the number and the type of glasses consumed; a sub-menu (119) for various drinks, which allows entry of information regarding the amount of different type of drink consumed and their alcoholic strength.

A subsequent screen page (121) summarises the input received and allows the user to concisely check that the data supplied is correct. The calculation procedure (110) is concluded with application of Watson's formula to obtain the blood-alcohol concentration, according to the equation:

$$BAC = 100 \times \underline{\frac{am.\,of\ drink \times (alcoh.\ Str./100) \times 0.79 - 9.5 \times time\ el.}{TBW\,/\,0.8157}},$$

where the amount of drink is expressed in millilitres, the alcoholic strength in percentage units, the time elapsed in hours, and the constants represent, respectively, 0.79 alcohol density, in grams per millilitre, 9.5 the mean metabolic absorption of alcohol, in grams per hour, and 0.8157 the volumetric fraction of water in the blood; TBW is the total amount of water in the body, expressed in millilitres, which can be obtained by adding together three contributions, respectively linked to the person's gender, weight and height, which can be deduced from known constants and individual characteristics in the known way previously described.

If the result obtained, displayed on a final screen page (120), is greater than 0.05, in g/dl, equivalent to 0.5 mg/ml, which constitutes the maximum blood-alcohol level limit established by the Italian Highway Code for driving vehicles, the calculation procedure (110) preferably also supplies an estimate of the time necessary for said value to fall until it is within the limits. To do this, the calculation procedure (110) assumes, similarly to Watson's formula, that the mean metabolic absorption is equal to 9.5 millilitres of alcohol per hour.

The invention described may be modified and adapted without thereby departing from the scope of the inventive concept. Moreover, all details of the invention may be substituted by technically equivalent elements.

Obviously, in practice modifications and/or improvements are possible, all covered by the claims herein.

**Claims**

1. A mobile telephony device, comprising a keypad (20) and having an electronic platform (11), designed to interpret programs in Java language, **characterised in that** it comprises a software (12) for calculating the blood-alcohol level using information that can be entered using the keypad (20).

2. The device according to claim 1, **characterised in that** the software (12) comprises an executable program which conforms to MIDP specifications for mobile telephones (10).

3. The device according to claim 2, **characterised in that** the software (12) is implemented by means of an OTA transmission using radio waves (23) from a remote supplier (2).

4. The device according to claim 2, **characterised in that** the software (12) is implemented by means of a transmission via cable (22) from a PC (3).

5. The device according to claim 2, **characterised in that** the software (12) is implemented by means of a transmission with an infrared port (21) from a PC (3).

6. The device according to claim 1 or 2, **characterised in that** the software (12) comprises a calculation procedure (110), designed to supply a user with an estimate of the blood-alcohol level by application of a numeric formula.

7. The device according to claim 1 or 2, **characterised in that** the software (12) comprises a calculation procedure (110), designed to supply a user with an estimate of the blood-alcohol level and an estimate of the time necessary for the blood-alcohol level to fall until it is below a predetermined value by application of a numeric formula.

8. The device according to claim 6 or 7, **characterised in that** the calculation procedure (110) comprises a first level of personal information (111), designed to acquire as input the user's gender, height and weight.

9. The device according to claim 6 or 7, **characterised in that** the calculation procedure (110) comprises a second level of time information (112), designed to acquire as input the time when the last alcoholic drink was consumed.

10. The device according to claim 6 or 7, **characterised in that** the calculation procedure (110) comprises a third level of mode information (113), designed to acquire as input the type and the amount of alcohol drinks consumed.

11. The device according to claim 10, **characterised in that** the third level of mode information (113) comprises a menu (114) designed for separate selection of various types of drinks consumed.

**12.** The device according to claim 11, **characterised in that** the menu (114) comprises a plurality of sub-menus (115, 116, 117, 118, 119), each dedicated to a type of drink.

**13.** The device according to claim 11 or 12, **characterised in that** the calculation procedure (110) comprises a screen page (121), designed for a summary and check of the input received.

**14.** The device according to claim 12, **characterised in that** the menu (114) comprises a sub-menu (115) dedicated to beers.

**15.** The device according to claim 12, **characterised in that** the menu (114) comprises a sub-menu (116) dedicated to wines.

**16.** The device according to claim 12, **characterised in that** the menu (114) comprises a sub-menu (117) dedicated to spirits.

**17.** The device according to claim 12, **characterised in that** the menu (114) comprises a sub-menu (118) dedicated to cocktails.

**18.** The device according to claim 12, **characterised in that** the menu (114) comprises a sub-menu (119) dedicated to various drinks.

**19.** The device according to claim 1, **characterised in that** the software (12) comprises an initial menu (100), designed for selection of texts (101, 102, 104, 106, 108) relating to the subject.

**20.** The device according to claim 1, **characterised in that** the software (12) comprises an initial menu (100), designed for selection of links (103, 105, 107, 109) using a WAP link to sites relating to the subject.

**21.** The device according to claim 19, **characterised in that** the initial menu (100) is suitable for selecting an instructions text (101) relative to software (12) operation.

**22.** The device according to claim 19, **characterised in that** the initial menu (100) is suitable for selecting an information text about a "community" (102) based on this subject.

**23.** The device according to claim 19, **characterised in that** the initial menu (100) is suitable for selecting an update text (104) for the software (12).

**24.** The device according to claim 19, **characterised in that** the initial menu (100) is suitable for selecting an initiative sponsor text (106).

**25.** The device according to claim 19, **characterised in that** the initial menu (100) is suitable for selecting a general information text (108) about the subject.

**26.** The device according to claim 20, **characterised in that** the initial menu (100) is suitable for selecting a link (103) to a "community" based on this subject.

**27.** The device according to claim 20, **characterised in that** the initial menu (100) is suitable for selecting a link (105) to a remote supplier (2), designed to display and download the updates available.

**28.** The device according to claim 20, **characterised in that** the initial menu (100) is suitable for selecting a link (107) to the initiative sponsor's site.

**29.** The device according to claim 20, **characterised in that** the initial menu (100) is suitable for selecting a link (109) to sites relating to the subject.

**30.** The device according to claim 6 or 7, **characterised in that** the software (12) comprises an exit procedure (122) from the calculation procedure (110).

**31.** The device according to claim 6 or 7, **characterised in that** the calculation procedure (110) comprises a screen page (120), designed to display the result of application of the numeric formula.

FIG. 1

Fig. 2